(19) Europäisches Patentamt

European Patent Office

Office européen des brevets

(11) EP 0 669 591 B1

(12) EUROPÄISCHE PATENTSCHRIFT

(45) Veröffentlichungstag und Bekanntmachung des Hinweises auf die Patenterteilung:
08.12.1999 Patentblatt 1999/49

(51) Int Cl.⁶: **G06K 7/08**, G06K 7/10

(21) Anmeldenummer: 95890025.0

(22) Anmeldetag: 03.02.1995

(54) **Kontaktloses Datenübertragungssystem**

System for contactless data transmission

Système de transmission de données sans contact

(84) Benannte Vertragsstaaten:
BE CH DE DK ES FR GB IT LI NL SE

(30) Priorität: 23.02.1994 AT 37994

(43) Veröffentlichungstag der Anmeldung:
30.08.1995 Patentblatt 1995/35

(73) Patentinhaber: Mikron Aktiengesellschaft für integrierte Mikroelektronik
A-8101 Gratkorn (AT)

(72) Erfinder:
• Watzinger, Hubert Dipl.-Ing.
A-8010 Graz (AT)
• Amtmann, Franz Dipl-Ing.
A-8010 Graz (AT)
• Arnold, Siegfried
A-8052 Graz (AT)

(74) Vertreter:
Groenendaal, Antonius Wilhelmus Maria et al
INTERNATIONAAL OCTROOIBUREAU B.V.,
Prof. Holstlaan 6
5656 AA Eindhoven (NL)

(56) Entgegenhaltungen:
FR-A- 2 609 813        FR-A- 2 665 038
FR-A- 2 693 294        NL-A- 288 711
US-A- 4 100 378

**Beschreibung**

Die vorliegende Erfindung betrifft ein kontaktloses Datenübertragungssystem zwischen mindestens einer Sende- und Empfangsstation und mehreren Transpondern, wobei die Sende- und Empfangsstation einen HF-Oszillator zur Erzeugung eines HF-Signals zur Informationsübertragung zu den Transpondern aufweist und wobei die Transponder Einrichtungen zur Informationsübertragung zu der Sende- und Empfangsstation aufweisen, insbesondere eine Sendestufe zur Belastungsmodulation des von der Sende- und Empfangsstation ausgesandten HF-Signals, und wobei weiters die Sende- und Empfangsstation einen Demodulator zum Demodulieren des von den Transpondern ausgesandten Signals aufweist.

Ein derartiges Datenübertragungssystem ist aus dem österreichischen Patent Nr. 395 224 bekannt. Anwendungsbeispiele dafür sind die automatische Straßenmauteinhebung durch selbsttätige Kontaktabbuchung, sobald ein fahrzeugseitiger Transponder eine Sende- und Empfangsstation einer Mautstelle passiert. Identitätsweise können in Read Only-Betriebsweise kontrolliert werden und Zutrittskontrollsysteme ermöglichen die Ermittlung des Umfanges einer Sperrberechtigung und protokollieren die individuellen Zutritte. Bei Werkzeugwechselsystemen auf Werkzeugmaschinen kann die Steuerung aufgrund der an den einzelnen Werkzeugen vorgesehen Transponder vorgenommen werden, wobei die Transponderdaten Kenngrößen über Werkzeugtype und Standzeit einschließlich einer Fehlerkorrekturinformation vermitteln.

Allgemein können bei solchen Datenübertragungssystemen passive Transponder (ohne eigene Energieversorgung) oder aktive Transponder (mit eigener Energieversorgung) eingesetzt werden. Passive Transponder können kleiner und kostengünstiger hergestellt werden, sie haben aber im Vergleich zu aktiven Transpondern nur eine verhältnismäßig geringe Reichweite, weil sie ihren Energiebedarf aus dem von der Sende- und Empfangsstation ausgesendeten HF-Signal decken müssen.

Im Gegensatz dazu werden aktive Transponder nicht durch das elektromagnetische Feld einer Sende- und Empfangsstation mit Energie versorgt, sondern aus einer autarken Energiequelle, wie z.B. einer Batterie oder einer Fotozelle. Bei dem aus dem österreichischen Patent Nr. 395 224 bekannten Datenübertragungssystem sind nur passive Transponder vorgesehen. Diese arbeiten im Sendebetrieb mit Belastungsmodulation, was eine Reduktion der erforderlichen Komponenten ermöglicht, sodaß der Transponder auf einem einzelnen Halbleiterbaustein integriert werden kann und solcherart sehr kostengünstig herstellbar ist. Aufgrund von Fortschritten bei der Entwicklung von energiesparender Schaltungstechnik ist es in letzter Zeit gelungen, passive Transponder mit großer Reichweite herzustellen. Solche Transponder werden vorzugsweise bei sogenanten "Handsfree"-Zutrittkontrollsystemen eingesetzt (z.B. Skilift-Zutrittskontrolle).

Befinden sich mehrere passive Transponder im Feld einer Sende- und Empfangsstation, so kommt es durch Überlagerung von Aussendungen von verschiedenen Transpondern zu Informationsverfälschungen. Es können zwar diese Informationsverfälschungen in der Kontrolleinheit einer Sende- und Empfangsstation erkannt werden und zudem ist durch ein geeignetes Abfrage-/Antwort-Verfahren (wie in dem Patent Nr. 395 224 beschrieben) eine Identifizierung aller im Erfassungsbereich einer Sende- und Empfangsstation befindlichen Transponder möglich: Sobald die Sende- und Empfangsstation durch das Anwesenheitsprotokoll die Anwesenheit von mehreren Transpondern festgestellt hat, beginnt die Abfrage, ob sich ein Transponder aus einer Hälfte der Gesamtanzahl von Transpondern im Erfassungsbereich der Sende- und Empfangsstation befindet. Dies geschieht, indem die Sende- und Empfangsstation ein Abfrageprotokoll sendet. Befindet sich ein Transponder oder mehrere aus der befragten Gruppe im Nahbereich der Sende- und Empfangsstation, so antworten diese durch Übertragung ihres individuellen Codes und einiger Prüfbits an die Sende- und Empfangsstation. Antwortet nur ein Transponder, so ist dieser damit bereits identifiziert. Antworten mehrere Transponder, so ergibt sich eine synchrone Überlagerung der Antworten, was im Zusammenhang mit den Prüfbits von der Sende- und Empfangsstation erkannt wird. Nun startet die Sende- und Empfangsstation eine weitere Abfrage, wobei die befragte Gruppe von Transpondern wieder um die Hälfte reduziert wird. Dies geschieht so lange, bis nur mehr ein Transponder antwortet. Antwortet auf eine Abfrage hin kein Transponder, so wird mit der Unterteilung der komplementären Transpondergruppe fortgesetzt.

Dieses bekannte Verfahren stellt allerdings nur einen prinzipiellen Lösungsansatz dar. In der Praxis eingesetzt würde die Unterteilung in Gruppen sehr zeitintensiv sein, weil zur Identifizierung eines Transponders bis zu $^{2}$logN Abfragen (N Gesamtzahl aller Transponder, nicht nur der Transponder, die sich im Erfassungsbereich der Sende- und Empfangsstation befinden) notwendig sind.

Es ist Aufgabe der vorliegenden Erfindung, ein Datenübertragungssystem der eingangs genannten Art derart zu verbessern, daß die Auswahl eines aus mehreren, im Erfassungsbereich eines Sende- und Empfangsgerätes befindlichen Transponders sehr zeiteffizient und damit praktikabel ist.

Diese Aufgabe wird erfindungsgemäß dadurch gelöst, daß das innere Produkt (Skalarprodukt) des Signales $f_0$ zur Übertragung einer logischen NULL und des Signales $f_1$ zur Übertragung einer logischen EINS vom Transponder zur Sende- und Empfangsstation gleich 0 ist, d.h. daß

$$\int_0^T f_0(t) \cdot f_1(t) \cdot h(t) \, dt = 0 \quad (1)$$

gilt, wobei h(t) eine beliebige Gewichtsfunktion ist und T die Periodenzeit für die Übertragung von einem Bit ist,und daß in der Sende- und Empfangsstation zwei Korrelatoren vorgesehen sind, deren Eingänge einerseits mit dem Demodulator und anderseits mit Generatoren für Signale $f_0.h$ bzw. $f_1.h$ verbunden sind.

Dadurch, daß das innere Produkt der beiden Signale 0 ist, ist es möglich, in der Sende- und Empfangsstation mit jeweils einem Korrelator durch skalare Multiplikation des empfangenen Signales mit $f_0.h$ bzw. $f_1.h$ festzustellen, ob von einem Transponder (oder von mehreren Transpondern) eine 0 oder eine 1 gesendet wurde. Wenn nur ein Transponder im Erfassungsbereich vorhanden ist, kann jeweils nur der eine oder der andere Korrelator ein Signal ungleich 0 erzeugen, weil ein und derselbe Transponder zur selben Zeit immer nur entweder ein Bit 0 oder ein Bit 1 sendet. Wenn jedoch zumindest zwei Transponder anwesend sind, so muß sich ihr Identifikationssignal in mindestens einem Bit unterscheiden, d.h. an dieser Stelle werden gleichzeitig ein Bit 0 und ein Bit 1 übertragen, sodaß beide Korrelatoren ein Signal ungleich liefern. Damit kann erkannt werden, an welchen Bitpositionen Kollisionen auftreten. Damit sind zur Identifizierung eines Transponders maximal so viele Zyklen notwendig, wie Transponder im Erfassungsbereich vorhanden sind (im allgemeinen höchstens 3 oder 5);im Gegensatz dazu sind bei dem oben beschriebenen bekannten System bis zu $^2$logN Zyklen notwendig, wobei N die Gesamtzahl <u>aller</u> Transponder ist (bei größeren Systemen 10.000 oder 100.000 oder noch mehr), sodaß hier 14, 17 oder noch mehr Zyklen erforderlich sein können, selbst wenn nur zwei Transponder im Erfassungsbereich vorhanden sind.

Es ist normalerweise am einfachsten, wenn man h(t) = 1 wählt (für alle t). In diesem Fall kann in der Sende- und Empfangsstation das einfallende Signal in den Korrelator mit $f_0$ bzw. $f_1$ multipliziert werden, d.h. mit denselben Signalen, die von den Transpondern erzeugt werden.

Spezielle, für das erfindungsgemäße Datenübertragungssystem geeignete orthogonale Signalformen sind in den Unteransprüchen beschrieben und werden anhand der Figuren näher erläutert.

Fig. 1 zeigt ein Prinzipschaltbild einer Sende- und Empfangsstation;
Fig. 2 ein Prinzipschaltbild eines passiven Transponderns;
Fig. 3 ein pulsweitenmoduliertes HF-Signal;
Fig. 4 bis 6 Möglichkeiten für "0" und "1" Signale und
Fig. 7 ein belastungsmoduliertes HF-Signal.

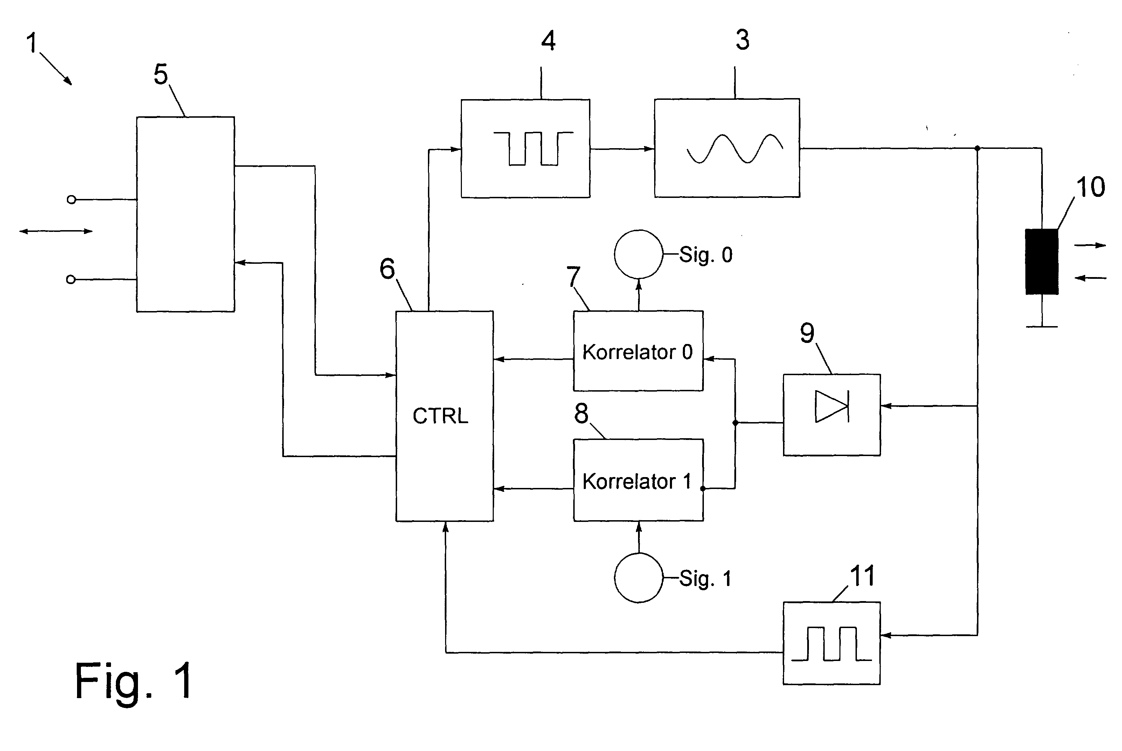

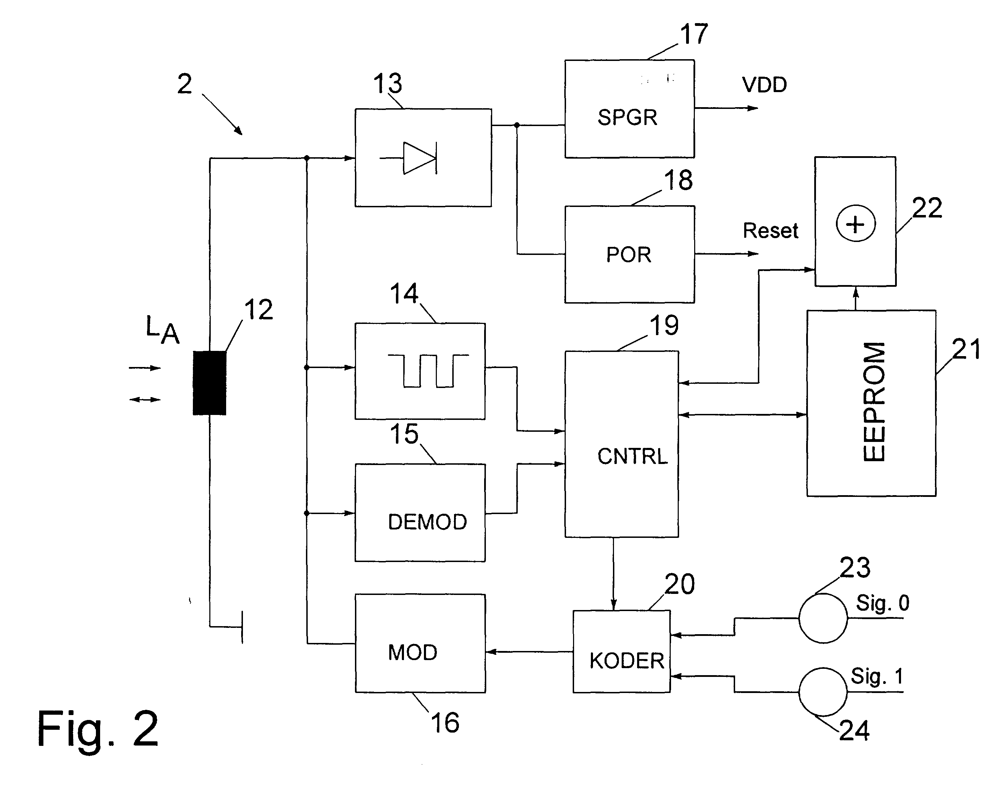

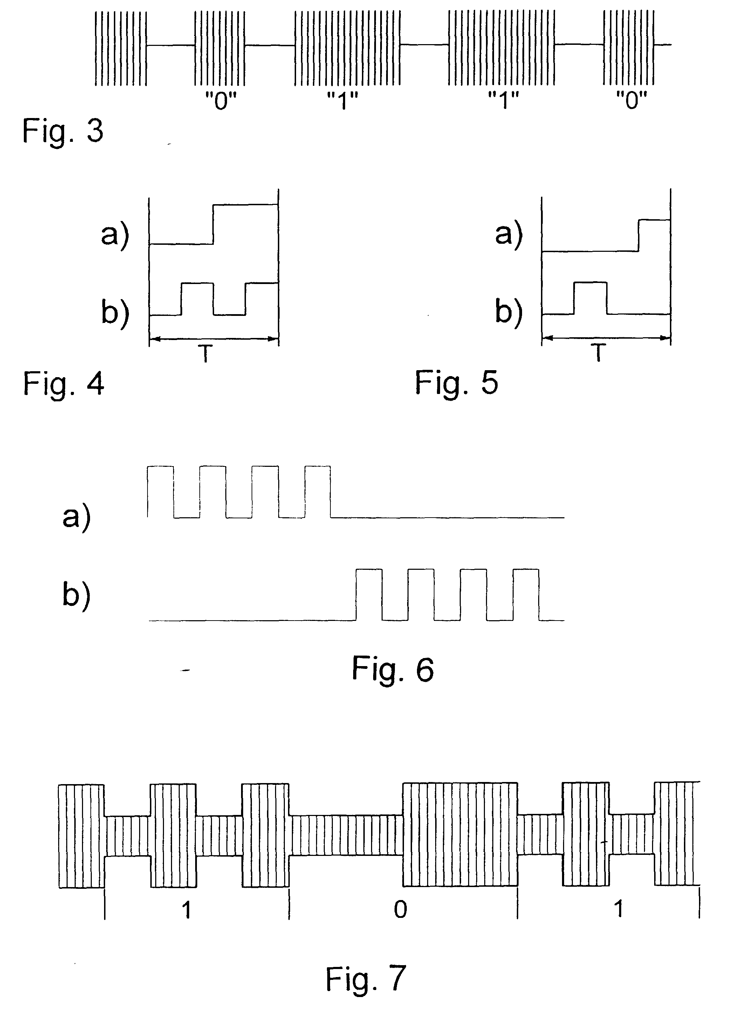

Gemäß Fig. 1 wird in einer Sende- und Empfangsstation 1 in einem Oszillator 3 ein HF-Signal zur Übertragung von Energie, Takt und Information an einen Transponder 2 (Fig. 2) generiert. Die Frequenz des HF-Signales führt den Systemtakt (Zeitbasis) sowohl in der Sende- und Empfangsstation 1 als auch im passiven Transponder 2. Dieser Systemtakt wird in der Sende- und Empfangsstation 1 aus dem HF-Signal des Oszillators 3 in einem Taktableiter 11 gewonnen. Der Taktableiter 11 ist als Aufbereitungsschaltung zu verstehen, in der das empfangene Energiesignal in den digitalen Systemtakt derselben Frequenz umgewandelt wird. Eine Steuereinheit 6 dient als übergeordnete Steuerung für die Sende- und Empfangsstation 1. Ferner führt das vorzugsweise zu 100% amplitudenmodulierte HF-Signal dem passiven Transponder 2 Energie zu. Die Information, die über eine Schnittstelle 5 aus einem Speicher einer Datenverarbeitungsanlage fließt, wird über einen Modulator 4 dem HF-Signal des Oszillators 3 durch Pulsweitenmodulation aufmoduliert. Diese Modulationsart bewirkt Austastlücken, welchen eine größere oder kleinere Anzahl von HF-Schwingungen bzw., anders ausgedrückt, ein längeres oder kürzeres HF-Signal folgt. Die Signallänge nach jeder Austastlücke bzw. die Anzahl der Schwingungen sind ein Kriterium für eine NULL- oder EINS-Information der im Digitalsystem zu übertragenden Daten. Dieses pulsweitenmodulierte, taktführende und energietransportierende HF-Signal ist in Fig. 3 dargestellt. Es wird gemäß Fig. 1 über eine Antennenspule 10 vom Oszillator 3 ausgekoppelt. Die Schaltung nach Fig. 1 zeigt ferner noch einen Demodulator 9, der für den bidirektionalen, gegebenenfalls in Vollduplex erfolgenden Informationsfluß eine Information über die Antennenspule 10 erhält und über die Korrelatoren 7 und 8 der Steuereinheit 6 und der Schnittstelle 5 zu einer externen Datenverarbeitungsanlage weiterleitet. Die gemäß Fig. 3 modulierten Daten erreichen sämliche im Erfassungsbereich befindlichen Transponder zum gleichen Zeitpunkt; demzufolge beginnen nach Demodulation und Dekodierung der Daten auch alle Transponder synchron mit ihren Aussendungen.

Die verschiedenen Signale der Transponder werden in der Sende- und Empfangsanlage zu einem gemeinsamen resultierenden Signal zusammengesetzt. Dieses Gesamtsignal wird nach Demodulation den beiden Korrelatoren 7 und 8 zugeführt. Diese Korrelatoren 7, 8 untersuchen das Eingangssignal über einen bestimmten, von der

EP 0 669 591 B1

Steuereinheit 6 vorgegebenen Zeitraum nach der "0" oder "1" Signalform und liefern am Ende dieses Zeitraumes gegebenenfalls ein von NULL verschiedenes Ausgangssignal. Es ist wichtig, daß die Signalformen für "0" und "1" so gewählt werden, daß das Skalarprodukt bzw. das innere Produkt gleich 0 ist, denn nur in diesem Fall liefert der Korrelator 7 nur dann ein Ausgangssignal, falls ein "0" Signal am Eingang liegt; falls ein "1" Signal am Eingang dieses Korrelators liegt, liefert dieses unabhängig von seiner Amplitude kein Ausgangssignal. Das gleiche gilt sinngemäß für den Korrelator 8. Beispiele für mögliche Signalformen sind in Fig. 4 bis 6 gegeben. Die Steuereinheit 6 überprüft nun den von den Korrelatoren 7 und 8 gelieferten Datenstrom. Wenn die Korrelatoren 7 und 8 abwechselnd Ausgangssignale liefern, ist der Datenstrom von allen im Erfassungsbereich befindlichen Transpondern gleich. Sobald zu einem bestimmten Zeitpunkt beide Korrelatoren 7 und 8 ein Ausgangssignal liefern, ist an dieser Bitposition eine Kollision entstanden.

In der Folge beginnt die Steuereinheit 6 mit der Aussendung eines Kommandos, wobei vorzugsweise durch Angabe von Bitposition und Datum (0 oder 1) ein Selektivvorgang eingeleitet wird.

Ein passiver Transponder 2 (Fig. 2) umfaßt eine Antennenspule 12 mit nachgeschaltetem Gleichrichter 13 (vorzugsweise in Brückenschaltung), Spannungsregler 17 sowie einem Resetgenerator 18, letzterer sperrt die gesamte Transponderschaltung bei Unterschreiten einer den Betrieb noch zuverlässig gewährleistenden Minimalspannung. Die im Gleichrichter 13 entstehende und im Spannungsregler 17 auf einen bestimmten Wert heruntergeregelte Gleichspannung dient als Versorgungsspannung des passiven Transponders 2. Die Energieversorgung erfolgt also bei Annäherung des passiven Transponders 2 an die Sende- und Empfangsstation 1 aufgrund des übertragenen HF-Signales.

Der Transponder 2 erfaßt den Systemtakt in einem Taktableiter 14 und demoduliert das über die Antennenspule 12 einlangende pulsweitenmodulierte HF-Signal in einem Demodulator 15. Dieser umfaßt einen Pausendetektor zur Feststellung der Austastlücken zwischen den Signalblöcken und einen Zähler, der die Länge des Signalblockes durch Frequenzimpulszählung feststellt und mit einem Schwellenwert vergleicht. Kurze Signalblöcke, deren Schwingungsanzahl unter einem Schwellenwert liegt, stellen ein NULL-Signal, und lange Signalblöcke, deren Schwingungsanzahl über dem Schwellenwert liegt, ein EINS-Signal im digitalen Datensystem dar. Über eine Steuerheit 19 gelangen die Daten in den Speicher 21.

In der Steuereinheit 19 sind alle logischen Funktionen und Abläufe des passiven Transponders 2 zusammengefaßt. Je nach Anwendung können unterschiedliche Übertragungsprotokolle, Datenprüfung, Kryptographie, Zugriffskontrollen und andere logische Vergänge implementiert werden. Im besonderen wird durch die Steuereinheit 19 der Datenstrom vom Speicher 21 über den Koder 20 und den Modulator 16 und die Antennenspule 12 zur Sende- und Empfangsstation 1 übertragen. In Abhängigkeit der zu übertragenden Daten wird über den Koder eine "0"-oder "1"-Signalform an den Modulator 16 gespeist. Der Modulator 16 ist eine Schaltung (vorzugsweise ein Transistor), die die Spannung an der Antennenspule 12 des Transponders im Rhythmus der vom Koder gelieferten Signalformen belastet. Die Steuereinheit 19 enthält auch Einrichtungen zur Dekodierung der von der Sende- und Empfangsstation 1 kommendenBefehle. Insbesondere wird im Falle von Kollisionen von Aussendungen bei mehreren Transpondern 2 im Bereich einer Sende- und Empfangsstation 1 ein Selektiervorgang eingeleitet, und zwar durch Übertragung eines Selektierkommandos sowie eines beliebig langen Datenstromes, dem z.B. Adresse und Daten eines Speicherbereiches im EEPROM entsprechen.

Sämtliche Transponder 2 vergleichen nun den einlaufenden Datenstrom mit dem entsprechenden Inhalt des EEPROMs mit Hilfe eines digitalen Komparators. Jene Transponder, bei denen der Vergleich positiv abgelaufen ist (d. h. Übereinstimmung der Datenströme), antworten weiterhin auf Selektierkommandos von der Sende- und Empfangsstation 1, während ein negatives Resultat ein Ausscheiden der entsprechenden Transponder aus dem Selektiervorgang zur Folge hat. Somit können mit den Elementen Steuereinheit 19, Speicher 21 und Komparator 22 und einem entsprechenden Befehlsatz, der in der Steuereinheit 19 implementiert ist, sämtliche notwendigen Aufgaben zur Selektierung eines bestimmten Transponders im Arbeitsbereich einer Sende- und Empfangsstation 1 erledigt werden.

Wie bereits erwähnt, ist es gemäß der vorliegenden Erfindung wesentlich, daß das Skalarprodukt von der Signalform $f_0$ für die "0" mit der Signalform $f_1$ für die "1" gleich 0 ist:

$$\int_0^T f_0(t) \cdot f_1(t) \cdot h(t)\, dt = 0 \qquad (1)$$

Dabei wird man der Einfachheit halber h(t) = 1 für alle t wählen. Damit reduziert sich die Formel (1) auf folgenden Ausdruck:

$$\int_0^T f_0(t) \cdot f_1(t) \, dt = 0 \qquad (1')$$

In diesem Fall sind die Generatoren für die "0"- und "1"-Signalform gleich den auf Seiten der Sende- und Empfangsstation 1 verwendeten Signalformgeneratoren für die beiden Korrelatoren 7 und 8. Dies ist bei allen Signalformen der Fall, die in den Fig. 4-6 dargestellt sind.

In Fig. 4 ist unter a) folgende Funktion $h_0$ und unter b) folgende Funktion $h_1$ dargestellt:

$$h_0(t-t_0) = -a \qquad 0 < t < T/2$$
$$h_0(t-t_0) = a \qquad T/2 < t < T \qquad (2)$$

$$h_1(t-t_0) = -a \qquad 0 < t < T/4$$
$$h_1(t-t_0) = a \qquad T/4 < t < T/2$$
$$h_1(t-t_0) = -a \qquad T/2 < t < 3T/4$$
$$h_1(t-t_0) = a \qquad 3T/4 < t < T \qquad (3)$$

Bei den in Fig. 4 dargestellten Signalformen ist $t_0$ jeweils 0 gewählt. Wenn $t_0$ von 0 verschieden ist, dann wäre die Signalform unverändert, sie wäre lediglich auf der Zeitachse ein Stück verschoben. Die beiden Funktion $h_0$ und $h_1$ können den beiden Funktionen $f_0$ und $f_1$ beliebig zugeordnet werden, d.h. es kann entweder gelten: $f_0 = h_0$ und $f_1 = h_1$; oder es kann gelten: $f_0 = h_1$ und $f_1 = h_0$.

Andere mögliche Funktionen h0 und $h_1$ sind in Fig. 5a bzw. 5b dargestellt; diese Funktionen lassen sich mathematisch wie folgt definieren:

$$h_0(t-t_0) = -a \qquad 0 < t < 3T/4$$
$$h_0(t-t_1) = a \qquad 3T/4 < t < T \qquad (4)$$

$$h_1(t-t_0) = -a \qquad 0 < t < T/4$$
$$h_1(t-t_0) = a \qquad T/4 < t < T/2 \qquad (5)$$
$$h_1(t-t_0) = -a \qquad T/2 < t < T$$

Besonders bevorzugt ist jedoch, wenn die Funktionen $h_0$ und $h_1$ jeweils für eine Hälfte der Bitzeit konstant sind und in der jeweils anderen Hälfte der Bitzeit eine beliebige Funktion $g_1$ bzw. $g_2$ darstellen, für die gilt:

$$\int_0^{T/2} g_1(t) \, dt = 0$$

und

$$\int_{T/2}^{T} g_2(t)\ dt = 0.$$

Mathematisch läßt sich das wie folgt darstellen:

$$h_0(t-t_0) = g_1(t) \qquad 0 < t < T/2$$
$$h_0(t-t_0) = c_1 \qquad T/2 < t < T \qquad (6)$$

$$h_1(t-t_0) = c_2 \qquad 0 < t < T/2$$
$$h_1(t-t_0) = g_2(t) \qquad T/2 < t < T \qquad (7)$$

Zur Vereinfachung der Schaltung ist es natürlich zweckmäßig, wenn gilt: $g_1 = g_2$ und $c_1 = c_2$.

In einfacher Weise wird man für $g_1$ und $g_2$ jeweils eine Rechteckfunktion nehmen, deren Priodendauer ein Teil der Bitperiode ist; mathematisch ausgedrückt heißt dies:

$$g_1(t-t_0) = g_2(t-t_0) = c_1 = c_2 \qquad 0 < t < T/4n$$
$$g_1(t-t_0) = g_2(t-t_0) = -c_1 = -c_2 \qquad T/4n < t < T/2n \qquad (8)$$

periodisch mit T/2n, wobei n eine natürliche Zahl ist. Diese Funktion ist in Fig. 6 dargestellt. Die Verwendung derartiger Funktionen $h_0$ und $h_1$ für $f_0$ und $f_1$ hat den Vorteil, daß sie besonders störungsunanfällig ist.

**Patentansprüche**

1. Kontaktloses Datenübertragungssystem zur Übertragung von Daten zwischen mindestens einer Sende- und Empfangsstation (1) und mehreren Transpondern (2), wobei die Sende- und Empfangsstation (1) einenHF-Oszillator (3) zur Erzeugung eines HF-Signales (Fig. 3) zur Informationsübertragung zu den Transpondern (2) aufweist und wobei die Transponder (2) Einrichtungen zur Informationsübertragung zu der Sende- und Empfangsstation (1) aufweisen, und wobei weiters die Sende- und Empfangsstation (1) einen Demodulator (9) zum Demodulieren des von den Transpondern (2) ausgesandten Signales aufweist, dadurch gekennzeichnet, daß das innere Produkt (Skalarprodukt) des Signales ($f_0$) zur Übertragung einer logischen NULL und des Signales ($f_1$) zur Übertragung einer logischen EINS vom Transponder (2) zur Sende- und Empfangsstation (1) gleich 0 ist, d.h. daß

$$\int_0^T f_0(t)\ .\ f_1(t)\ .\ h(t)\ dt = 0 \qquad (1)$$

gilt, wobei h(t) eine beliebige Gewichtsfunktion ist und T die Periodenzeit für die Übertragung von einem Bit ist, und daß in der Sende- und Empfangsstation (1) zwei Korrelatoren (7, 8) vorgesehen sind, deren Eingänge einerseits mit dem Demodulator (9) und anderseits mit Generatoren für Signale $f_0.h$ bzw. $f_1.h$ verbunden sind.

2. Datenübertragungssystem nach Anspruch 1 dadurch gekennzeichnet, daß die Sende- und Empfangsstation (1) Einrichtungen zur induktiven drahtlosen Energie- und Taktübertragung mit Hilfe eines einzigen, in einem HF-Oszillator (3) erzeugten HF-Signales), Einrichtungen zur Datenübertragung durch Pulsweitenmodulation dieses Signales aufweist, wobei zumindest ein passiver Transponder (2) einen Gleichrichter (13) für das empfangene HF-Signal, einen Pulsweitendemodulator (15), eine Sendestufe zur Belastungsmodulation des HF-Signales und einen Datenspeicher (21) umfaßt und wobei die Sendestufe die Daten überträgt, indem sie zu gewissen Zeiten das HF-Signal belastungsmoduliert.

3. Datenübertragungssystem nach Anspruch 1 oder 2, dadurch gekennzeichnet, daß h(t) = 1 ist für alle t im Bereich von 0 bis T.

4. Datenübertragungssystem nach Anspruch 3, dadurch gekennzeichnet, daß folgende beiden Funktionen $h_0$, $h_1$ für $f_0$ und $f_1$ ausgewählt sind:

$$
\begin{aligned}
h_0(t-t_0) &= -a & 0 < t < T/2 \\
h_0(t-t_0) &= a & T/2 < t < T \quad .
\end{aligned}
\qquad (2)
$$

$$
\begin{aligned}
h_1(t-t_0) &= -a & 0 < t < T/4 \\
h_1(t-t_0) &= a & T/4 < t < T/2 \\
h_1(t-t_0) &= -a & T/2 < t < 3T/4 \\
h_1(t-t_0) &= a & 3T/4 < t < T
\end{aligned}
\qquad (3)
$$

beide Funktionen periodisch mit T( Fig. 4).

5. Datenübertragungssystem nach Anspruch 3, dadurch gekennzeihnet, daß folgende beiden Funktionen $h_0$, $h_1$ für $f_0$ und $f_1$ ausgewählt sind:

$$
\begin{aligned}
h_0(t-t_0) &= -a & 0 < t < 3T/4 \\
h_0(t-t_1) &= a & 3T/4 < t < T
\end{aligned}
\qquad (4)
$$

$$
\begin{aligned}
h_1(t-t_0) &= -a & 0 < t < T/4 \\
h_1(t-t_0) &= a & T/4 < t < T/2 \\
h_1(t-t_0) &= -a & T/2 < t < T
\end{aligned}
\qquad (5)
$$

beide Funktionen periodisch mit T. (Fig. 5)

6. Datenübertragungssystem nach Anspruch 3, dadurch gekennzeichnet, daß folgende beiden Funktionen $h_0$, $h_1$ für $f_0$ und $f_1$ ausgewählt sind:

$$h_0(t-t_0) = g_1(t) \qquad 0 < t < T/2$$
$$h_0(t-t_0) = c_1 \qquad T/2 < t < T \tag{6}$$

$$h_1(t-t_0) = c_2 \qquad 0 < t < T/2$$
$$h_1(t-t_0) = g_2(t) \qquad T/2 < t < T \tag{7}$$

wobei

$$\int_0^{T/2} g_1(t) \, dt = 0$$

und

$$\int_{T/2}^{T} g_2(t) \, dt = 0$$

gilt und wobei vorzugsweise $g_1 = g_2$ und $c_1 = C_2$ gilt.

**7.** Datenübertragungssystem nach Anspruch 6, dadurch gekennzeichnet, daß gilt:

$$g_1(t-t_0) = g_2(t-t_0) = c_1 = c_2 \qquad 0 < t < T/4n$$
$$g_1(t-t_0) = g_2(t-t_0) = -c_1 = -c_2 \qquad T/4n < t < T/2n \tag{8}$$

periodisch mit T/2n, wobei n eine natürliche Zahl ist.

**Claims**

**1.** A contactless data transmission system for the transmission of data between at least one transmitter and receiver station (1) and a plurality of transponders (2), the transmitter and receiver station (1) including an RF oscillator (3) for generating an RF signal (Fig. 3) for the transmission of information to the transponders (2), the transponders (2) including devices for the transmission of information to the transmitter and receiver station (1), the transmitter and receiver station (1) also including a demodulator (9) for demodulating the signal transmitted by the transponders (2), characterized in that the inner product (scalar product) of the signal ($f_0$) for transmitting a logic ZERO and the signal ($f_1$) for transmitting a logic ONE from the transponder (2) to the transmitter and receiver station (1) equals zero, i.e. that

$$\int_0^{T} f_0(t).f_1(t).h(t)dt = 0 \tag{1}$$

where h(t) is an arbitrary weighting function and T is the period time for the transmission of one bit, and that the transmitter and receiver station (1) includes two correlators (7, 8) whose inputs are connected to the demodulator (9) on the one side and to generators for signals $f_0.h$ and $f_1.h$ on the other side

2. A data transmission system as claimed in claim 1, characterized in that the transmitter and receiver station (1) includes devices for the inductive, contactless transmission of power and clock signals by means of a single RF signal which is generated in an RF oscillator (3), devices for data transmission by pulse width modulation of this signal, at least one passive transponder (2) being provided with a rectifier (13) for the received RF signal, a pulse width demodulator (15) a transmitter stage for load modulation of the RF signal and a data memory (21), the transmitter stage transmitting the data in that it load modulates the RF signal at given instants.

3. A data transmission system as claimed in Claim 1 or 2, characterized in that h(t) = 1 for all t in the range of from 0 to T.

4. A data transmission system as claimed in Claim 3, characterized in that the following two functions $h_0$, $h_1$ are selected for $f_0$ and $f_1$:

$$h_0(t-t_0) = -a \qquad 0 < t < T/2$$

$$h_0(t-t_0) = a \qquad T/2 < t < T \qquad (2)$$

$$h_1(t-t_0) = -a \qquad 0 < t < T/4$$

$$h_1(t-t_0) = a \qquad T/4 < t < T/2$$

$$h_1(t-t_0) = -a \qquad T/2 < t < 3T/4$$

$$h_1(t-t_0) = a \qquad 3T/4 < t < T \qquad (3)$$

both functions being periodic with T (Fig. 4).

5. A data transmission system as claimed in claim 3, characterized in that the following two functions $h_0$, $h_1$ are selected for $f_0$ and $f_1$:

$$h_0(t-t_0) = -a \qquad 0 < t < 3T/4$$

$$h_0(t-t_1) = a \qquad 3T/4 < t < T \qquad (4)$$

$$h_1(t-t_0) = -a \qquad 0 < t < T/4$$

$$h_1(t-t_0) = a \qquad T/4 < t < T/2$$

$$h_1(t-t_0) = -a \qquad T/2 < t < T \qquad (5)$$

both functions being periodic with T (Fig. 5).

6. A data transmission system as claimed in Claim 3, characterized in that the following two functions $h_0$, $h_1$ are selected for $f_0$ and $f_1$:

$$h_0(t-t_0) = g_1(t) \qquad 0 < t < T/2$$

$$h_0(t-t_0) = c_1 \qquad T/2 < t < T \qquad (6)$$

$$h_1(t\text{-}t_0)=c_2 \qquad 0 < t < T/2$$

$$h_1(t\text{-}t_0)=g_2(t) \qquad T/2 < t < T \tag{7}$$

where

$$\int_0^{T/2} g_1(t)dt = 0$$

and

$$\int_{T/2}^{T} g_2(t)dt = 0$$

and where preferably $g_1 = g_2$ and $c_1 = c_2$.

**7.** A data transmission system as claimed in Claim 6, characterized in that the following holds:

$$g_1(t\text{-}t_0 = g_2(t\text{-}t_0) = c_1 = c_2 \qquad 0 < t < T/4n$$

$$g_1(t\text{-}t_0 = g_2(t\text{-}t_0) = \text{-}c_1 = \text{-}c_2 \qquad T/4n < t < T/2n \tag{8}$$

periodic with T/2n, where n is a natural number.

## Revendications

**1.** Système de transmission de données sans contact en vue de la transmission de données entre au moins une station émettrice/réceptrice (1) et plusieurs transpondeurs (2), la station d'émission/réception (1) présentant un oscillateur HF (3) en vue de la production d'un signal HF (Fig. 3) pour la transmission d'informations vers les transpondeurs (2) et les transpondeurs (2) présentant des dispositifs de transmission d'informations vers les stations émettrices/réceptrices (1) et la station émettrice/réceptrice (1) présentant par ailleurs un démodulateur (9) en vue de la démodulation du signal transmis par les transpondeurs (2), caractérisé en ce que le produit interne (produit scalaire) du signal ($f_0$) en vue de la transmission d'un ZERO logique et du signal ($f_1$) en vue de la transmission d'un UN logique par le transpondeur (2) vers l'unité d'émission/réception (1) est égal à 0, c'est-à-dire que

$$\int_0^T f_0(t) \cdot f_1(t) \cdot h(t) \ dt = 0 \tag{1}$$

h (t) étant une fonction de pondération quelconque et T la durée périodique pour la transmission d'un bit et que, dans la station d'émission/réception (1) sont prévus deux corrélateurs (7,8) dont les entrées sont reliées d'une part au démodulateur (9) et, d'autre part, aux générateurs pour les signaux ($f_0$.h ou $f_1$.h).

**2.** Système de transmission de données selon la revendication 1, caractérisé en ce que la station émettrice/réceptrice (1) comporte des dispositifs en vue de la transmission d'énergie et de rythme inductive et sans fil à l'aide d'un seul signal HF produit dans un oscillateur HF (3), des dispositifs de transmission de données par modulation de la largeur d'impulsion de ce signal, au moins un transpondeur passif (2) présentant un redresseur (13) pour le signal HF reçu, un démodulateur de largeur d'impulsion (15), un étage de transmission pour la démodulation de charge du signal HF et une mémoire de données (21) et l'étage de transmission transmettant les données par le fait qu'il module la charge du signal HF à certains moments.

3. Système de transmission de données selon l'une des revendications 1 ou 2, caractérisé en ce que h(t) = 1 pour tout t dans la zone de 0 à T.

4. Système de transmission de données selon la revendication 3, caractérisé en ce que les deux fonctions ho et $h_1$ suivantes sont sélectionnées pour $f_0$ et $f_1$ :

$$h_0(t-t_0) = -a \qquad 0 < t < T/2$$
$$h_0(t-t_0) = a \qquad T/2 < t < T \tag{2}$$

$$h_1(t-t_0) = -a \qquad 0 < t < T/4$$
$$h_1(t-t_0) = a \qquad T/4 < t < T/2 \tag{3}$$
$$h_1(t-t_0) = -a \qquad T/2 < t < 3T/4$$
$$h_1(t-t_0) = a \qquad 3t/4 < t < T$$

les deux fonctions périodiquement avec T (Fig. 4).

5. Système de transmission de données selon la revendication 3, caractérisé en ce que les deux fonctions ho et $h_1$ suivantes sont sélectionnées pour $f_0$ et $f_1$ : les deux fonctions périodiquement avec T (Fig. 5).

$$h_0(t-t_0) = -a \qquad 0 < t < 3T/4$$
$$h_0(t-t_1) = a \qquad 3T/4 < t < T \tag{4}$$

$$h_1(t-t_0) = -a \qquad 0 < t < T/4$$
$$h_1(t-t_0) = a \qquad T/4 < t < T/2 \tag{5}$$
$$h_1(t-t_0) = -a \qquad T/2 < t < T$$

6. Système de transmission de données selon la revendication 3, caractérisé en ce que les deux fonctions $h_0$, $h_1$ suivantes sont sélectionnées pour $f_0$ et $f_1$ :

$$h_0(t-t_0) = g_1(t) \qquad 0 < t < T/2$$
$$h_0(t-t_0) = c_1 \qquad T/2 < t < T \tag{6}$$

$$h_1(t-t_0) = c_2 \qquad 0 < t < T/2$$
$$h_1(t-t_0) = g_2(t) \qquad T/2 < t < T \tag{7}$$

avec

$$\int_{0}^{T/2} g_1(t)\,dt = 0$$

et

$$\int_{T/2}^{T} g_2(t)\,dt = 0$$

et, de préférence, $g_1 = g_2$ et $c_1 = c_2$.

7.  Système de transmission de données selon la revendication 6, caractérisé en ce que:

$$g_1(t-t_0) = g_2(t-t_0) = c_1 = c_2 \qquad 0 < t < T/4n$$

$$g_1(t-t_0) = g_2(t-t_0) = -c_1 = -c_2 \qquad T/4n < t < T/2n \tag{8}$$

périodiquement avec T/2n, n étant un nombre naturel.

Fig. 1

EP 0 669 591 B1

Fig. 2

"0"    "1"    "1"    "0"

Fig. 3

a)

b)

T

Fig. 4

a)

b)

T

Fig. 5

a)

b)

Fig. 6

1          0          1

Fig. 7